# EUROPEAN PATENT SPECIFICATION

(11) **EP 2 176 751 B1**
(45) Date of publication and mention of the grant of the patent: **15.10.2014**
(21) Application number: 08826472.6
(22) Date of filing: 16.07.2008
(51) Int. Cl.: G06F 9/46, G06F 9/50

(54) **SCHEDULING BY GROWING AND SHRINKING RESOURCE ALLOCATION**
ZEITPLANUNG MITTELS VERGRÖSSERUNG UND VERKLEINERUNG DER RESSOURCENZUWEISUNG
ORDONNANCEMENT PAR L'AUGMENTATION ET LE RÉDUCTION D'ALLOCATION DE RESSOURCES

(30) Priority: 16.07.2007 US 778487
(43) Date of publication of application: 21.04.2010
(73) Proprietor: Microsoft Corporation, Redmond, WA 98052-6399 (US)
(72) Inventor: BARNARD, Joshua B., Redmond, Washington 98052-6399 (US); JIN, Yun, Redmond, Washington 98052-6399 (US)
(74) Representative: Grünecker, Kinkeldey, Stockmair & Schwanhäusser
(86) International application number: PCT/US2008/070147
(87) International publication number: WO 2009/012296

(56) References cited:
- US-A- 5 031 089
- US-A1- 2002 002 578
- US-A1- 2003 158 884
- US-A1- 2004 194 089
- US-A1- 2006 089 922
- BUISSON, B. ET AL.: 'Scheduling Malleable Applications in Multicluster Systems.' COREGRID TECHNICAL REPORT NUMBER TR-0092. May 2007, XP031324113
- 'How the Compute Cluster Server Works.' MICROSOFT TECHNET., [Online] June 2006, XP008129746 Retrieved from the Internet: <URL:http://technet.microsoft.com/en-us/lib rary/cc720072.aspx>

## Description

Resources in a large computing environment are often managed by a scheduling system. Such resources may be clusters of computers or processors, or may include other resources. Large computing tasks may be allocated across blocks of resources by a scheduling mechanism. In many cases, large computing resources may be in great demand, so efficient scheduling may better utilize such resources.

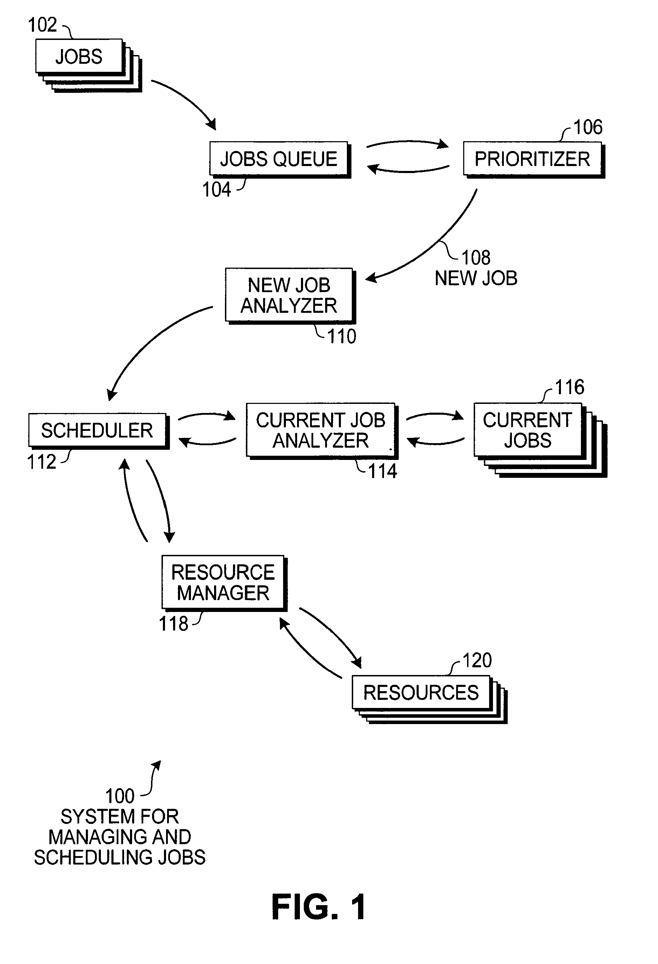

US 2006/089922 A1 relates to a method, system and apparatus for allocating resources to a software configurable computing environment. As illustrated in Figure 1, entities can be used to establish a software configurable computing environment (SCCE). The SCCE can support the operation of at least one application and can utilize one or more entities as building blocks during environment construction. Entities can define the assets that provide the resources. A resource allocation engine allocates assets that provide the computing resources using an acquisition mechanism and a relinquish mechanism. The resource allocation engine can assure that sufficient assets of an appropriate type are allocated to provide a user-defined quantity of computer resources. A resource utilization engine provides one or more programmatic actions for the application, and in particular, links available resources of the SCCE with the application tasks that consume those resources. A resource management engine manages resources of the SCCE, mapping resources to assets that provide the resources, determining which resources are used which are available and the like.

It is the object of the present invention to provide an improved method for scheduling by growing and shrinking resource allocation, as well as a corresponding system and computer-readable medium.

This object is solved by the subject matter of the independent claims.

Preferred embodiments are defined by the dependent claims.

A scheduler for computing resources may periodically analyze running jobs to determine if additional resources may be allocated to the job to help the job finish quicker and may also check if a minimum amount of resources is available to start a waiting job. A job may consist of many tasks that may be defined with parallel or serial relationships between the tasks. At various points during execution, the resource allocation of active jobs may be adjusted to add or remove resources in response to a priority system. A job may be started with a minimum amount of resources and the resources may be increased and decreased over the life of the job.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In the drawings,
FIGURE 1 is a diagram illustration of an embodiment showing a system for managing and scheduling jobs.
FIGURE 2 is a diagram illustration of an embodiment showing a job and resource loading for the job.
FIGURE 3 is a flowchart illustration of an embodiment showing a method for allocating resources to running and waiting jobs.

### Detailed Description

Shared computing resources may be allocated to various jobs using a scheduling system. The scheduling system may include a queue for new jobs, where a priority system may determine which job will be started next. An analyzer may periodically evaluate executing jobs to identify resources that are underutilized and may determine to start a new job or allocate additional resources to existing jobs.

Each job may be defined as a series of tasks. Some tasks may be linked in a serial or parallel fashion and each task may use a range of resources. At some points during execution, multiple tasks may be executed in parallel while at other points, a task may wait for other tasks to complete before execution. During a period where parallel tasks may be performed, a job may be completed faster up by applying additional resources, and during other periods, the same resources may be allocated to other jobs.

In some cases, new jobs may be started by determining the minimum amount of resources that may be used to start a job. When those resources become available, the new job may be started. As other resources become free, they may be allocated to the new job so that the new job may be quickly completed.

During the periodic analysis of resource allocation, an algorithm may be used to allocate resources among executing jobs and to decide if a new job is to be started. Different embodiments may use different algorithms. For example, one embodiment may favor completing existing jobs as soon as possible while another embodiment may favor starting new jobs as soon as possible. In some cases, individual priorities between jobs and resources may be considered in selecting a course of action.

Specific embodiments of the subject matter are used to illustrate specific inventive aspects. The embodiments are by way of example only, and are susceptible to various modifications and alternative forms. The appended claims are intended to cover all modifications, equivalents, and alternatives falling within the scope of the invention as defined by the claims.

Throughout this specification, like reference numbers signify the same elements throughout the description of the figures.

When elements are referred to as being "connected" or "coupled," the elements can be directly connected or coupled together or one or more intervening elements may also be present. In contrast, when elements are referred to as being "directly connected" or "directly coupled," there are no intervening elements present.

The subject matter may be embodied as devices, systems, methods, and/or computer program products. Accordingly, some or all of the subject matter may be embodied in hardware and/or in software (including firmware, resident software, micro-code, state machines, gate arrays, etc.) Furthermore, the subject matter may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. By way of example, and not limitation, computer readable media may comprise computer storage media and communication media.

Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by an instruction execution system. Note that the computer-usable or computer-readable medium could be paper or another suitable medium upon which the program is printed, as the program can be electronically captured, via, for instance, optical scanning of the paper or other medium, then compiled, interpreted, of otherwise processed in a suitable manner, if necessary, and then stored in a computer memory.

Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

When the subject matter is embodied in the general context of computer-executable instructions, the embodiment may comprise program modules, executed by one or more systems, computers, or other devices. Generally, program modules include routines, programs, objects, components, data structures, etc. that perform particular tasks or implement particular abstract data types. Typically, the functionality of the program modules may be combined or distributed as desired in various embodiments.

Figure 1 is a diagram of an embodiment 100 showing a system for managing and scheduling jobs. Embodiment 100 may be used to controls jobs that may use many computing resources. For example, a cluster of computers may be organized to perform large computing jobs that may be spread across the various computers that make up the cluster.

Many different types of computer resources may be managed. For example, individual processors in a cluster of computers or on a multi-processor computer may be assigned individual tasks that make up a computing job. In other cases, memory resources may be allocated, both random access memory and data storage memory. Network resources may be allocated as well as software licenses, computing resources, and other resources for which there may be contention. Embodiment 100 may be used to manage and allocate any computing resource that may be shared across multiple jobs.

Each job 102 may be composed of multiple tasks. The tasks may be discrete blocks of executable code or functions that may be performed. Each task may have separately defined resources that may be used by the task. For example, in a typical case of a job that is performed on a cluster of processors, an individual task may be performed on a single processor or may use a single software license. In some embodiments, each task may use multiple resources. For example, a task may be defined that uses four processors or defined to run with a minimum of two processors and a maximum of eight processors.

Because jobs 102 may be defined with multiple tasks, a job may use different levels of resources during the course of execution. For example, a job may have several tasks that may be performed in parallel. The job may be performed by assigning each task to a separate processor and have the job finish quickly. The job may also be performed by executing each task in succession o. a single processor.

Jobs 102 may be placed in a job queue 104 prior to being executed. A prioritizer 106 may evaluate the jobs in the job queue 104 to determine which job may be executed next.

The prioritizer 106 may use different mechanisms and algorithms for determining which job to execute next. In some embodiments, each job may have a general priority, such as low, medium, and high. Some embodiments may use the length of time since the job has been submitted as another factor. An algorithm may be used to calculate a priority for each pending job, sort the queue, and identify the next job to be executed.

The new job 108 selected by the prioritizer 106 may be analyzed by a new job analyzer 110. The new job analyzer 110 may determine the minimum resources that may be used to start the new job 108. When the minimum amount of resources becomes available, the new job 108 may be started.

The scheduler 112 may determine the allocation of resources across the various jobs. In some instances, the scheduler 112 may add resources to an executing job and in other instances the scheduler 112 may remove resources from a job. During execution, a current job analyzer 114 may analyze the current or running jobs 116 to determine if a job is using all of its allocated resources or if additional resources could be allocated to the job.

In many cases, a job may have multiple tasks that may be operated in parallel and may use additional resources during the period where multiple tasks are being executed in parallel. In other cases, a job may have tasks that are serial or sequentially dependent such that one task is performed after another task has completed. In jobs with many tasks with parallel and sequential dependencies, a job may use different amounts of resources during execution. During a period of massive parallel execution of tasks, the maximum amount of resources may be allocated to the job. Once the period has passed and the job enters a period where many tasks are sequentially dependent, the job may have more resources allocated than the job can use.

During execution of a job, the current job analyzer 114 may determine a maximum amount of resources that may be allocated for a job. The maximum amount of resources may be used to determine how many resources may be applied to the job to finish the job as quickly as possible, for example. The current job analyzer 114 may determine a minimum amount of resources that may be allocated for the same job. The minimum amount of resources may be used by the scheduler 112 to remove a resource so that a higher priority job may use the resource, for example. In this or other cases, the minimum amount of resources may be determined so that a job may be executed without causing a deadlock due to insufficient resources.

The resource manager 118 may monitor and analyze the resources 120 to determine the current status of the various resources 120. In many cases, the allocated resources may include processors for cluster computing applications. In other cases, the allocated resources may include individual computers, various types of memory devices, network connections and bandwidth, various input or output devices, and software licenses or other computing resources. In this specification, any reference to cluster computing and allocating processor or computer resources is by way of example and not limitation.

The scheduler 112 may have many different types of algorithms and may use various factors in determining when to start a new job and how to allocate or apportion resources across various jobs. Each embodiment may use a different logic and/or formula for allocating resources. In some embodiments, a logic may be defined that emphasizes using as much of the resources as possible to complete a job that is executing as soon as possible. Other logic may take into consideration the priority of an executing job and allocate resources in favor of a higher priority job over a lower priority job. Still other embodiments may be designed to begin jobs as soon as possible by allocating resources to new jobs instead of executing jobs.

In some embodiments, the scheduler 112 may evaluate running jobs, allocate resources amongst the running jobs, and then allocate unused resources to any new jobs. Other embodiments may prioritize running jobs and pending jobs together using various algorithms and weighting schemes.

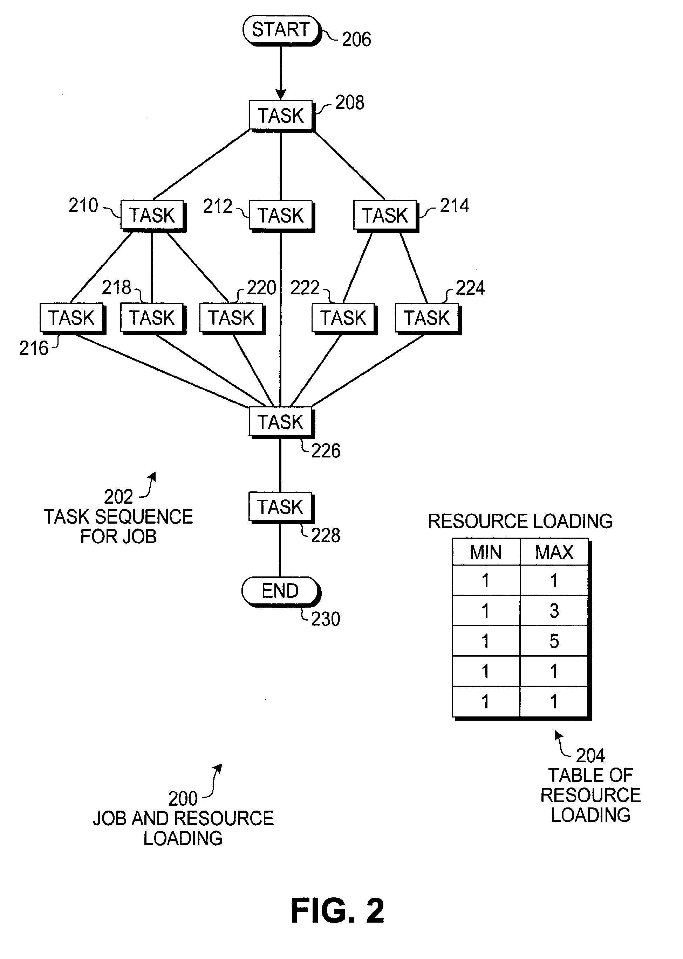

Figure 2 is a diagram illustration of an embodiment 200 showing an example of a job and the resource loading for the job. Jobs may be defined as many individual tasks that may be linked together as parallel tasks or dependent or sequential tasks. In an example of a cluster computing application, each task may be a separate executable item that may be operated on an individual processor. Other embodiments may divide jobs into tasks using other criteria. Tasks may have specific input or output data that are shared between certain tasks and may be the basis for relationships between tasks.

A graphical representation of a task sequence 202 for a job is shown on the left and a table of resource loading 204 is shown on the right.

The task sequence 202 starts at block 206. A first task 208 may be used to initialize the job. Corresponding with the first task 208, the first row of the table 204 indicates that the resource loading has a maximum of one and a minimum of one. The maximum and minimum resource loading may be the amount of resources that may be allocated to the job for that period of time. Since the task 208 is the one task that is operational, one resource may be assigned.

For the purposes of this simplified example, each task may be defined to use a single resource, which may be any type of computing resource. In other examples, each task may have use multiple resources spanning different categories of resources. For example, a single task may use between two and sixteen processors, network access, and a software license while another task may be use single processor, a specific output device, and no software license. In the example of Figure 2, each task may correspond to a single resource to illustrate the concepts.

Tasks 210, 212, and 214 may be performed in parallel after task 208 is completed. While tasks 210, 212, and 214 are being performed, the resource loading has a maximum of three and a minimum of one resource. When the resource loading is one, each of the tasks 210, 212, and 214 may be performed in sequence using the single resource. If more resources are allocated to the job, two or more tasks may be performed simultaneously. For example, if two resources are allocated to the job 202, task 210 and 212 may be performed simultaneously and if three resources were allocated, tasks 210, 212, and 214 may be performed in parallel.

A job scheduler may allocate resources to various jobs based on priority. For example, if the job 202 had a higher priority than other jobs being executed, additional resources may be assigned up to the maximum resource loading so that the job 202 may be completed sooner. Conversely, if the job 202 had a lower priority than other jobs, either executing jobs or pending jobs, resources may be assigned to the other jobs but the minimum resource loading may be preserved for job 202 so that job 202 may continue to be executed.

Tasks 216, 218, and 220 are dependent on task 210 and are parallel tasks. Similarly, tasks 222 and 224 are parallel tasks and are dependent on task 214. During this period, the resource loading may be a maximum of five and a minimum of one.

Task 226 is dependent on tasks 216, 218, 220, 222, 224, and 212. The dependency of task 226 on the other tasks may be defined such that task 226 may not be started until all of the other tasks have been completed. During the period of task 226, the maximum resource loading and the minimum resource loading may be one. While the various tasks on which task 226 depends are completing, one or more tasks may complete before the remaining tasks. If, for example, five resources are allocated to the job and two of the tasks complete before the remaining tasks, three resources may be actively used by the remaining tasks but two resources may be excess and may not be used by the job 202. Such excess resources may be recovered by a job scheduler and assigned to other jobs once the tasks using the resources are complete.

Task 228 may be dependent on task 226 and may have a maximum and minimum resource loading of one. After task 228 is complete, the job 202 may end in block 230.

A scheduler may allocate resources to a job using various algorithms or logic. For example, at the beginning of the job 202, a scheduler may assign a maximum of five resources to the job 202 so that the job 202 may complete quickly, even though the first few tasks may complete without using the maximum resources. In other embodiments, a scheduler may assign one resource initially, and ramp up to five resources during the execution of tasks 216 through 224.

A scheduler may remove resources that are allocated to a job and allocate those resources to another job. For example, if five resources have been assigned to the job 202 and tasks 216 and 218 have been completed and tasks 220, 222, and 224 are in process, the job 202 may make use of three resources but not all five.

In many cases, a scheduler may evaluate the future resource loading that may be assigned to a job to determine the allocation of resources between jobs. For example, a scheduler may evaluate the job 202 and determine that the maximum resource loading is five and allocate five resources to the job 202, even though five resources may be not be fully utilized until tasks 216 through 224 are being performed.

In some embodiments, a scheduler may allocate resources at various stages of a job execution. For example, a scheduler may allocate a single resource to job 202, which may continue using a single resource until task 214 is completed. At that point, more resources may become available and the scheduler may allocate additional resources up to the maximum of five resources.

In some cases, a resource may become available and a scheduler may allocate the resource to a job that is operating below its maximum. In making such allocations, various factors may be evaluated, including the priority of the job, the difference between the current resource allocation and a maximum allocation for a job, the difference between the largest and smallest maximum resource loading for a job, or any other factor.

When resources are available, a scheduler may evaluate if a new job may be started. Each scheduler may have different logic or algorithms for determining when to start jobs and how to allocate resources. In some embodiments, a scheduler may attempt to allocate resources amongst executing jobs before attempting to allocate resources to a new job. In other embodiments, a scheduler may use an algorithm or logic that evaluates the priority of existing jobs and pending jobs and may allocate resources to a new job even though existing jobs may be capable of using those resources.

The example of Figure 2 illustrates one way the resource loading may be determined for the sequence 202. The sequence 202 may be divided into different steps with different resource loading. For example, if tasks 216 and 218 were grouped together and tasks 220, 222, and 224 were grouped together, the task loading may have a maximum resource loading of three. In some embodiments, an optimized resource loading may be determined by analyzing various groupings of tasks to determine an optimized resource loading amongst various tasks and jobs.

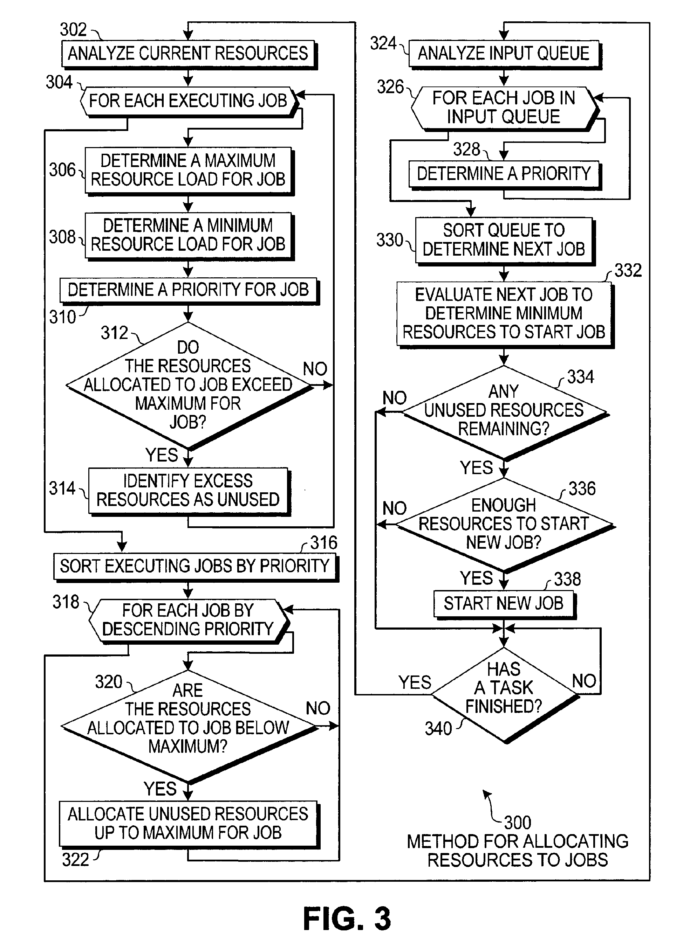

Figure 3 is a flowchart illustration of an embodiment 300 of an example of a method for allocating resources for jobs. Embodiment 300 is just one example of an algorithm or logic by which resources may be allocated to jobs that are executing and those jobs that are in a job queue awaiting execution.

While other embodiments may use different logic or methods for allocating resources, embodiment 300 is designed to allocate available resources to executing jobs based on the priority of the executing jobs. Once all resources are allocated to executing jobs, the highest priority waiting job may be started when the minimum amount of resources are available for the waiting job.

Embodiment 300 is an example of one algorithm. Those skilled in the art may appreciate that changes may be made to the embodiment 300 to yield different results, based on a specific implementation. Further, embodiment 300 may be adapted for the resource allocation of different types of resources that may be used by various tasks. In some embodiments, different types of resources may be managed by a scheduler and each job may use different amounts of each type of resource. Such embodiments may use similar or different logic or algorithms to allocate the various types of resources amongst jobs.

The current resources are analyzed in block 302. In many embodiments, a resource analyzer may determine how many resources are present, which resources are allocated, which resources are being utilized, or other information about the current resources. In some situations, the resources may occasionally come on and off line and may not be permanently available.

For each executing job in block 304, a maximum resource loading is determined in block 306, a minimum resource loading in block 308, and a priority for the job in block 310. The maximum and minimum resource loading may be determined for the entire length of a job or for a short section of the job, such as the next several tasks.

In some cases, embodiment 300 or a similar algorithm may be performed many times during the execution of a job, so that resources may be allocated and removed from a job several times over the course of execution. In such cases, the maximum and minimum resource loading for a job may be evaluated for a shorter period of time other than the length of the job execution. For example when resources may be allocated on a periodic basis such as every ten minutes, the maximum and minimum resource loading for a job may be evaluated for the next ten or twenty minutes of execution.

In some cases, the maximum and minimum resource loading may be recalculated when the resource loading changes substantially between jobs. For example, a recalculation may be performed if a task completion or several task completions causes the resource loading to increase or decrease substantially. Such an embodiment may be used to minimize recalculations of resource loading that do not substantially change the existing loading.

If the resources allocated to the job exceed the maximum for the job in block 312, the excess resources may be identified as unused in block 314. The excess resources may be allocated to other jobs in later steps of the algorithm.

In block 316, the executing jobs may be sorted by priority. Each embodiment may have different mechanisms for determining priority for jobs. In some cases, a user may determine a priority for a job prior to submittal. In other cases, the oldest jobs that are executing may be given higher priority than newer jobs. Still other cases may use other criteria or formulas for determining a priority.

For each job in descending priority in block 318, if the resources allocated are below the maximum in block 320, unused resources may be allocated to the job up to the maximum for the job in block 322. The steps of block 318, 320, and 322 allocate the various unused resources to the executing jobs so that the executing jobs may complete quickly, based on priority.

In block 324, the input queue is analyzed. The input queue may contain jobs that have not yet been executed. For each job in the input queue in block 326, a priority is determined in block 328. The priority for incoming jobs may be determined using any criteria or factor, including the length of time in the input queue, overall priority, or other factors.

The input queue is sorted in block 330 to determine the next job to be started. The minimum resources to start the next job are determined in block 332.

If any unused resources are available in block 334 and enough unused resources are available to start the new job in block 336, the new job is started in block 338. The process waits for a task to finish in block 340 before continuing.

If no resources remain in block 334 or if the remaining resources are not sufficient to start the new job in block 336, the process waits at block 340 until a task has finished.

The embodiment 300 is an algorithm that is designed to allocate available resources to existing jobs before starting a new job. Other embodiments may be designed so that high priority jobs in the job queue may be started even when available resources could be allocated to running or executing jobs.

Embodiment 300 is designed to be executed each time a task is completed. Such an embodiment may be useful in a situation where a task takes a relatively long time to complete. In embodiments where the tasks are short, the analysis of embodiment 300 may consume a large amount of overhead and may become unwieldy. In such cases, an embodiment may have an algorithm that is run when a job completes execution, when a certain number of tasks have been completed, or on a periodic time basis.

The foregoing description of the subject matter has been presented for purposes of illustration and description. It is not intended to be exhaustive or to limit the subject matter to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments except insofar as limited by the prior art.

## Claims

1. A method comprising:
for each one of a plurality of executing jobs operating on a plurality of resources:
periodically determining (306) a maximum and a minimum amount of resources that may be allocated to said job, each of said plurality of executing jobs being comprised of a plurality of tasks;
if the resources allocated to the job exceed the maximum for the job, identify (314) the excess resources as unused resources;
sorting (316) the plurality of executing jobs by priority;
for each one of the plurality of executing jobs by descending priority:
if the resources allocated to the job are below the maximum for the job, allocating (322) unused resources to the job up to the maximum for the job;
analyzing (324) an input queue containing jobs that have not yet been executed to determine the next job to be started; and
if enough unused resources are available to start the determined next job, starting the determined next job.

2. The method of claim 1, said plurality of tasks comprising at least two tasks being capable of being executed in parallel, and/or one of said plurality of tasks being sequentially dependent on another of said plurality of tasks.

3. The method of claim 1, said resources comprising at least one of a group composed of:
processors;
computers;
memory;
network bandwidth;
network connections;
input devices;
output devices; and
licenses.

4. The method of claim 1 further comprising:
determining that a first one of said plurality of executing jobs has a higher priority than a second one of said plurality of executing jobs;
determining that the minimum amount of resources that may be allocated to the second job is less than a set of resources allocated to the second job; and
allocating at least a portion of said set of resources allocated to the second job to said first job.

5. The method of claim 1 being initiated by the completion of one of said tasks.

6. The method of claim 1, wherein analyzing the job queue (328) to determine the next job to be started comprises determining a priority for the plurality of jobs in said job queue, each of said jobs comprised of a plurality of tasks, the method further comprising:
determining a minimum set of resources (332) to begin execution of said determined next job;
starting said determined next job (338) when said minimum set of resources is available.

7. The method of claim 6, said method being started in response to a completion of one of said tasks.

8. A system comprising:
a current job analyzer (114) adapted to periodically determine (306) a maximum and a minimum amount of resources that may be allocated to each one of a plurality of executing jobs, each of said plurality of executing jobs comprising a plurality of tasks;
a resource manager (118) adapted to determine a current state for a plurality of resources;
a scheduler (112) adapted to determine (312) if resources allocated to each of said plurality of executing jobs exceed the respective maximum for said job, to identify the excess resources as unused resources, and to assign at least some of said unused resources to said plurality of executing jobs based on the priority of each of said plurality of executing jobs;
a job queue adapted to receive a plurality of jobs that have not yet been executed, each of said plurality of jobs in the queue being comprised of a plurality of tasks; and
a priority system adapted to assign a priority to each of said plurality of jobs in said job queue and to determine a next job to be started;
said scheduler being further adapted to start said determined next job if enough unused resources are available to start said determined next job.

9. The system of claim 8 further comprising:
an incoming job analyzer (110) adapted to determine a minimum resource requirement for said determined next job;
said scheduler being further adapted to start said determined next job when said minimum resource requirement may be allocated to said determined next job.

10. The system of claim 9, said priority being determined by a formula comprising a length of time since a job has been in the job queue or by a formula comprising a priority setting for each of said plurality of jobs in said job queue.

11. The system of claim 8, said plurality of tasks comprising at least two tasks being capable of being executed in parallel, and/or one of said plurality of tasks being sequentially dependent on another of said plurality of tasks.

12. The system of claim 8, said resources comprising at least one of a group composed of:
processors;
computers;
memory;
network bandwidth;
network connections;
input devices;
output devices; and
licenses.

## Patentansprüche

1. Verfahren, umfassend:
für jeden einer Vielzahl von ausführenden Aufträgen, die auf einer Vielzahl von Ressourcen arbeiten:
periodisches Bestimmen (306) einer maximalen und einer minimalen Menge von Ressourcen, die jedem Auftrag zugeteilt werden können, wobei jeder aus der Vielzahl ausführender Aufträge aus einer Vielzahl von Aufgaben besteht;
sofern die Ressourcen, die dem Auftrag zugeteilt sind, das Maximum für den Auftrag überschreiten, Identifizieren (314) der überschüssigen Ressourcen als nicht verwendete Ressourcen;
Sortieren (316) der Vielzahl von ausführenden Aufträgen nach Priorität;
für jede aus der Vielzahl von ausführenden Aufträgen nach abnehmender Priorität:
sofern die Ressourcen, die dem Auftrag zugeteilt sind, unter dem Maximum für den Auftrag sind, Zuteilen (322) nicht verwendeter Ressourcen zu dem Auftrag bis zu dem Maximum für den Auftrag;
Analysieren (324) einer Eingangswarteschlange, die Aufträge umfasst, die bislang nicht ausgeführt wurden, um den nächsten zu beginnenden Auftrag zu bestimmen; und
sofern ausreichend nicht benutzte Ressourcen verfügbar sind, um den bestimmten nächsten Auftrag zu beginnen, Starten des bestimmten nächsten Auftrages.

2. Verfahren nach Anspruch 1, bei dem die Vielzahl von Aufgaben wenigstens zwei Aufgaben umfassen, die parallel ausgeführt werden können, und/oder eine der Vielzahl von Aufgaben anschließend von einer weiteren aus der Vielzahl von Aufgaben abhängig ist.

3. Verfahren nach Anspruch 1, bei dem die Ressourcen wenigstens ein Element einer Gruppe umfassen, die besteht aus:
Prozessoren;
Computern;
einem Speicher;
Netzwerkbandbreiten;
Netzwerkverbindungen;
Eingabevorrichtungen;
Ausgabevorrichtungen; und
Lizenzen.

4. Verfahren nach Anspruch 1, weiterhin umfassend:
Bestimmen, dass ein erster aus der Vielzahl von ausführenden Aufträgen eine höhere Priorität als ein zweiter aus der Vielzahl von ausführenden Aufträgen hat;
Bestimmen, dass die minimale Menge von Ressourcen, die dem zweiten Auftrag zugeteilt werden kann, geringer ist als ein Satz von Ressourcen, der dem zweiten Auftrag zugeteilt wird; und
Zuteilen wenigstens eines Teils des Satzes von Ressourcen, die dem zweiten Auftrag zugeteilt werden, zu dem ersten Auftrag.

5. Verfahren nach Anspruch 1, das durch die Vervollständigung einer der Aufgaben initiiert wird.

6. Verfahren nach Anspruch 1, bei dem das Analysieren der Auftragswarteschlange (328), um den nächsten zu beginnenden Auftrag zu bestimmen, das Bestimmen einer Priorität für die Vielzahl von Aufträgen in der Auftragswarteschlange umfasst, wobei jeder der Aufträge aus einer Vielzahl von Aufgaben besteht und das Verfahren weiterhin umfasst:
Bestimmen eines minimalen Satzes von Ressourcen (332), um die Ausführung des bestimmten nächsten Auftrages zu beginnen;
Beginnen des bestimmten nächsten Auftrages (338), wenn der minimale Satz von Ressourcen verfügbar ist.

7. Verfahren nach Anspruch 6, wobei das Verfahren in Erwiderung auf eine Vervollständigung einer der Aufgaben begonnen wird.

8. System, umfassend:
eine Analysiereinrichtung (114) für einen aktuellen Auftrag, die dazu eingerichtet ist, eine maximale und eine minimale Menge von Ressourcen periodisch zu bestimmen (306), die jedem aus der Vielzahl von ausführenden Aufträgen zugeteilt werden können, wobei jeder aus der Vielzahl von ausführenden Aufträgen eine Vielzahl von Aufgaben umfasst;
eine Ressourcen-Verwaltungseinrichtung (118), die dazu eingerichtet ist, einen aktuellen Zustand für eine Vielzahl von Ressourcen zu bestimmen;
eine Zeitplaneinrichtung (112), die dazu eingerichtet ist zu bestimmen (312), ob Ressourcen, die jedem aus der Vielzahl ausführender Aufträge zugeteilt werden, das jeweilige Maximum für den Auftrag überschreiten, um die überschüssigen Ressourcen als nicht verwendete Ressourcen zu identifizieren und wenigstens einige der nicht verwendeten Ressourcen der Vielzahl von ausführenden Aufträgen auf der Basis der Priorität jedes aus der Vielzahl von ausführenden Aufträgen zuzuteilen;
eine Auftragswarteschlange, die dazu eingerichtet ist, eine Vielzahl von Aufträgen, die noch nicht ausgeführt wurden, zu empfangen, wobei jeder aus der Vielzahl von Aufträgen in der Warteschlange, aus einer Vielzahl von Aufgaben besteht; und
ein Prioritätssystem, das dazu eingerichtet ist, eine Priorität jedem aus der Vielzahl von Aufträgen in der Auftragswarteschlange zuzuteilen und einen nächsten Auftrag zu bestimmen, der begonnen werden soll;
wobei die Zeitplaneinrichtung weiterhin dazu eingerichtet ist, den nächsten bestimmten Auftrag zu starten, sofern ausreichend nicht benutzte Ressourcen verfügbar sind, um den bestimmten nächsten Auftrag zu beginnen.

9. System nach Anspruch 8, weiterhin umfassend:
eine Analysiereinrichtung (110) für eintreffende Aufträge, die dazu eingerichtet ist, eine minimale Ressourcenanforderung für den bestimmten nächsten Auftrag zu bestimmen;
wobei die Zeitplaneinrichtung weiterhin dazu eingerichtet ist, den bestimmten nächsten Auftrag zu beginnen, wenn die minimale Ressourcenanforderung dem bestimmten nächsten Auftrag zugeteilt werden kann.

10. System nach Anspruch 9, bei dem die Priorität durch eine Formel, die eine Länge der Zeit umfasst, seitdem sich ein Auftrag in der Auftragswarteschlange befindet, oder durch eine Formel bestimmt wird, die eine Prioritätseinstellung für jeden aus der Vielzahl von Aufträgen in der Auftragswarteschlange umfasst.

11. System nach Anspruch 8, bei dem die Vielzahl von Aufgaben wenigstens zwei Aufgaben umfassen, die parallel ausgeführt werden können, und/oder eine aus der Vielzahl von Aufgaben anschließend von einer weiteren aus der Vielzahl von Aufgaben abhängig ist.

12. System nach Anspruch 8, wobei die Ressourcen wenigstens ein Element aus der Gruppe umfassen, die besteht aus:
Prozessoren;
Computern;
einem Speicher;
einer Netzwerkbandbreite;
Netzwerkverbindungen;
Eingabevorrichtungen;
Ausgabevorrichtungen; und
Lizenzen.

## Revendications

1. Procédé consistant à :
- pour chaque travail d'une pluralité de travaux d'exécution opérant sur une pluralité de ressources :
- périodiquement déterminer (306) une quantité maximale et minimale de ressources pouvant être allouées audit travail, chaque travail de ladite pluralité de travaux d'exécution étant constitué d'une pluralité de tâches ;
- si les ressources allouées au travail dépassent le maximum pour le travail, identifier (314) les ressources excédentaires comme ressources inutilisées ;
- trier (316) la pluralité de travaux d'exécution par priorité ;
- pour chaque travail d'une pluralité de travaux d'exécution par priorité descendante :
- si les ressources allouées au travail sont au-dessous du maximum pour le travail, allouer (322) les ressources inutilisées au travail jusqu'au maximum pour le travail ;
- analyser (324) une file d'attente d'entrée contenant des travaux n'ayant pas encore été exécutés pour déterminer le travail suivant à commencer ; et
- si suffisamment de ressources inutilisées sont disponibles pour commencer le travail suivant déterminé, commencer le travail suivant déterminé.

2. Procédé selon la revendication 1, ladite pluralité de tâches comprenant au moins deux tâches susceptibles d'être exécutées en parallèle et/ou une tâche de ladite pluralité de tâches étant séquentiellement dépendante d'une autre tâche de ladite pluralité de tâches.

3. Procédé selon la revendication 1, lesdites ressources comprenant au moins une ressource d'un groupe composé de :
- processeurs ;
- ordinateurs ;
- mémoire ;
- largeur de bande de réseau ;
- connexions de réseau ;
- dispositifs d'entrée ;
- dispositifs de sortie ; et
- licences.

4. Procédé selon la revendication 1, consistant, en outre, à :
- déterminer qu'un premier travail de ladite pluralité de travaux d'exécution a une priorité plus élevée qu'un second travail de ladite pluralité de travaux d'exécution ;
- déterminer que la quantité minimale de ressources pouvant être allouées au second travail est inférieure à un ensemble de ressources allouées au second travail ; et
- allouer au moins une partie dudit ensemble de ressources allouées au second travail audit premier travail.

5. Procédé selon la revendication 1, lancé par l'achèvement d'une desdites tâches.

6. Procédé selon la revendication 1, pour lequel analyser la file d'attente de travaux (328) pour déterminer le travail suivant à commencer consiste à déterminer une priorité pour la pluralité de travaux dans ladite file d'attente de travaux, chacun desdits travaux étant constitué d'une pluralité de tâches, le procédé consistant, en outre, à :
- déterminer un ensemble minimum de ressources (332) pour commencer l'exécution dudit travail suivant déterminé ;
- commencer ledit travail suivant déterminé (338) lorsque ledit ensemble minimum de ressources est disponible.

7. Procédé selon la revendication 6, ledit procédé étant lancé en réponse à l'achèvement d'une desdites tâches.

8. Système comprenant :
- un analyseur de travail actuel (114) adapté à périodiquement déterminer (306) une quantité maximale et minimale de ressources pouvant être allouées à chaque travail d'une pluralité de travaux d'exécution, chaque travail de ladite pluralité de travaux d'exécution étant constitué d'une pluralité de tâches ;
- un gestionnaire de ressources (118) adapté à déterminer un état actuel pour une pluralité de ressources ;
- un ordonnanceur (112) adapté à déterminer (312) si les ressources allouées à chaque travail de ladite pluralité de travaux d'exécution dépassent le maximum respectif pour ledit travail, pour identifier les ressources excédentaires comme ressources inutilisées et pour assigner au moins certaines desdites ressources inutilisées à ladite pluralité de travaux d'exécution en se fondant sur la priorité de chaque travail de ladite pluralité de travaux d'exécution ;
- une file d'attente de travaux adaptée à recevoir une pluralité de travaux n'ayant pas encore été exécutés, chaque travail de ladite pluralité de travaux dans la file d'attente étant constitué d'une pluralité de tâches ; et
- un système de priorité adapté à assigner une priorité à chaque travail de ladite pluralité de travaux dans la file d'attente de travaux et à déterminer un travail suivant à commencer ;
- ledit ordonnanceur étant, en outre, adapté à commencer ledit travail suivant déterminé si suffisamment de ressources inutilisées sont disponibles pour commencer ledit travail suivant déterminé.

9. Système selon la revendication 8, comprenant en outre :
- un analyseur de travail entrant (110) adapté à déterminer un besoin de ressources minimum pour ledit travail suivant déterminé ;
- ledit ordonnanceur étant, en outre, adapté à commencer ledit travail suivant déterminé lorsque ledit besoin de ressources minimum peut être alloué audit travail suivant déterminé.

10. Système selon la revendication 9, ladite priorité étant déterminée par une formule comprenant une longueur de temps qu'un travail s'est trouvé dans la file d'attente de travaux ou par une formule comprenant un paramètre de priorité pour chaque travail de ladite pluralité de travaux dans ladite file d'attente de travaux.

11. Système selon la revendication 8, ladite pluralité de tâches comprenant au moins deux tâches susceptibles d'être exécutées en parallèle et/ou une tâche de ladite pluralité de tâches étant séquentiellement dépendante d'une autre tâche de ladite pluralité de tâches.

12. Système selon la revendication 8, lesdites ressources comprenant au moins une ressource d'un groupe composé de :
- processeurs ;
- ordinateurs ;
- mémoire ;
- largeur de bande de réseau ;
- connexions de réseau ;
- dispositifs d'entrée ;
- dispositifs de sortie ; et
- licences.
